# EUROPEAN PATENT APPLICATION

(11) **EP 2 355 562 A1**
(43) Date of publication of application: **10.08.2011**
(21) Application number: 10152800.8
(22) Date of filing: 05.02.2010
(51) Int. Cl.: H04W 4/24

(54) **Method and rating engine for adjusting charging of communication events**

(71) Applicant: Tema Networks, Ltd., 00130 Helsinki (FI)
(72) Inventor: Anitkainen, Ismo, 02450, Sundsberg (FI); Heinonen, Tero, 00930, Helsinki (FI)
(74) Representative: Savela, Antti-Jussi Tapani

(57) **Abstract**

A method solves the problem of implementing flexile charging of subscribers so that no changes, or minor changes, need to do in charging systems. i.e. how the rating and charging of communication events can be separated. The method is provided for creating (204), responsive to a detection of a communication event (201), a notification relationship between a network node and a rating engine, wherein the notification relationship obeys a charging control protocol. Then the rating engine forms (205) a supplementary instruction on the basis of information obtained from the notification relationship. Finally, the rating engine sends (206) the supplementary instruction to the online charging system that re-charges the communication event according to the supplementary instruction. The invention also comprises a rating engine in accordance with a single charging embodiment in which the rating engine alone controls the charging of the communication event.

## Description

### Technical Field

The invention generally relates to charging communication events, such as making calls and sending messages. Especially the invention relates to flexible charging of subscribers.

### Background of the Invention

Subscribers can be divided into two categories: prepaid subscribers and postpaid subscribers. The known acronym CDR (call detail record) relates to the postpaid subscribes. When a call is ended the telephone exchange produces a CDR containing certain details of the call, such as the caller's number (A number), the called number (B-number), the time when the call was initiated, and the duration of the call. Telephone exchanges of a communications network send their CDRs to a data storage to be stoted there. A billing system reads the stored CDRs and makes a bill for each subscriber on the basis of each subscriber's CDRs.

A term "rating" refers to a monetary value of a communication event, such a call. For example, the call can be rated so that the price of the call is X monetary units per minute. In this way the applied rating model couples the monetary units to the charging.

Communication events of prepaid subscribers result in other kinds of charging units than CDRs. Those charging units are counted in dedicated servers and the counting results and monetary values of them are handled in other dedicated servers. Conversely as a postpaid subscriber, a prepaid subscriber does not need billing services. The prepaid subscriber can use the prepaid subscription as long as there are charging units left.

In the following we discuss four prior art methods or systems some of which relate to prepaid or postpaid subscribers and some of which relate to rating, charging or billing. Before that we remind that the invention deals with rating and charging of subscribers.

US2004105424 discloses a method that allows mobile network operators to collect charging information from various network elements. The method is intended to exploit open network architecture and lessen dependency on network elements services and billing systems. So-called "Open Charging (OC) middleware platform and gateway" system interacts with the network elements and creates a unifying layer in the mobile network. In more detail, it creates the unifying layer for different kinds of network elements services and billing systems.

US2003130914 relates to a method of rating and charging of postpaid and prepaid subscribers wherein data profiles of the postpaid and prepaid subscribers are stored in an intelligent network (IN) system. The method begins with the steps of storing a data profile for a prepaid subscriber in the IN system and invoking the IN system when the subscriber makes a call. Then the IN system invokes a rating module for the call and the rating module rates the call using a certain rating feature from a plurality of rating features.

US2006248010 discloses a system for revenue management. On the simplest level, the revenue management means tracks user accounts, manages balances, and prepares bills. The system can handle complex subscriber groups, such as corporate subscribers, and it can manage revenue for different payment models. The system enables flexible pricing and rating of bundles of services of voice, data, and content. The system includes a revenue generation module that provides optimally priced services for a user, a service provider, and the service provider's partners. The revenue generation module enables real-time access to customer data. Therefore, the service provider can respond quickly to changing market conditions by rapidly introducing competitive products and services.

US20060148446 discloses another flexible rating system. This system determines rating data for services and subscribers of a communications network. The system includes data associated with a subscriber or a service. In response to a rating request concerning a subscriber the system accesses the data associated with the subscriber and sends the accessed data to a distributed rating means. The distributed rating means retrieves rating data to perform so-called "distributed rating". Finally, the system determines a rating value for the subscriber on the basis of the retrieved rating data.

The two last-mentioned systems, the system of US2006248010 and the system of US20060148446, have the same goal as the invention, i.e. the flexible rating. The ways and means to reach this goal are, however, different. US2006248010 discloses a general level solution for the flexible rating but it seems to lack of technical details how the goal is achieved in practice. In addition, the system of US2006248010 manages billing, not charging. The system of US20060148446 deals with charging but it requires modifications to existing tariff servers. Conversely, within the invention the tariff server, which is termed an online charging system, remains the same.

A primary technical problem related to the invention is how the flexile charging of subscribers can be achieved without changes, or with minor changes, to charging systems. The primary technical problem can also put into words: how rating of communication events can be separated from charging of them. The before-mentioned US2003130914 proposes replacing the existing charging systems with a certain kind of IN system. The before-mentioned US2004105424 proposes the unifying layer that would operate on the existing charging systems. This solution is, however, probably very expensive because it is laborious to design and implement middleware between a number of different types of charging systems and other communications systems. Therefore, the solution is not suitable for ad-hoc needs when a communications network operator or a service provider wants to introduce new rating models.

### Brief Summary of the Invention

An objective of the invention is to solve the primary technical problem, i.e. the flexile charging of subscribers including prepaid subscribers and postpaid subscribers.

The invention comprises two main embodiments of which the first one is termed "recharging embodiment" and the second one is termed "single charging embodiment".

A method in accordance with the recharging embodiment comprises the following steps. The method makes at a network node a detection of the communication event and creates due to said detection a control relationship between the network node and an online charging system. The method charges, in the online charging system, the communication event according to an instruction obtained from the control relationship. The method creates, due to said detection, a notification relationship between the network node and a rating engine, wherein the notification relationship obeys a charging control protocol. Then the method forms at the rating engine a supplementary instruction on the basis of information obtained from the notification relationship. Lastly, the method sends the supplementary instruction from the rating engine to the online charging system and re-charges, in the online charging system, the communication event in according to the supplementary instruction. One example of the communication event is a call setup.

In the second main embodiment of the invention, in the single charging embodiment, a rating engine alone controls charging of a communication event. In more detail, the rating engine is the only node that sends due to the communication event a charging instruction to the online charging system.

The invention is specified in the enclosed claims.

### Brief Description of the Drawings

The invention is described more closely with reference to the accompanying drawings, in which
FIG. 1 shows an embodiment of the invention for prepaid charging,
FIG. 2 shows the method for adjusting charging,
FIG. 3 shows message transmission in the prepaid charging,
FIG. 4 shows the rating engine,
FIG. 5A shows an embodiment for postpaid charging,
FIG. 5B shows another embodiment postpaid charging,
FIG. 6 shows message transmission in the postpaid charging,

### Detailed Description of the Invention

The invention can be utilized in various ways for adjusting charging of prepaid or postpaid subscribers. The following figure shows one possible way to implement the method in accordance with the invention.

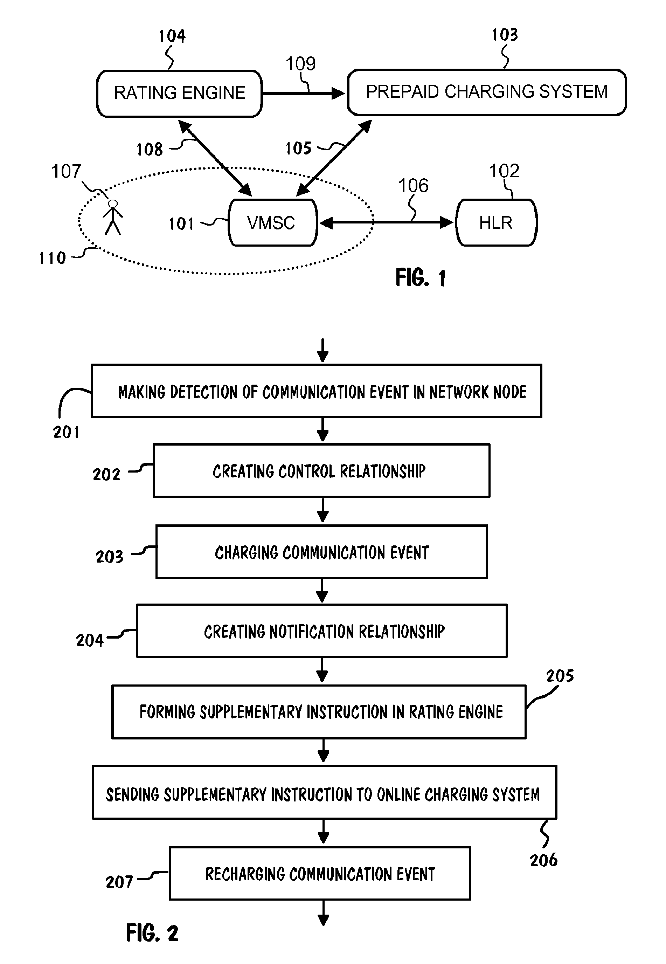

**FIG. 1** shows an embodiment of the invention for prepaid charging. A VMSC (Visited Mobile Switching Centre) 101, an HLR (Home Location Register) 102, and a prepaid charging system 103 are known nodes that are included in a GSM network and its successors such as 3G networks. The fourth node shown in FIG. 1 is a rating engine 104. The VMSC 101 represents the network node that makes a detection of the communication event starting the operation of the method. The detection of the communication event is, for example, a detection of a call setup. The VMSC 101 creates due to its detection a control relationship 105 between itself and an online charging system. The prepaid charging system 103 represents here the online charging system related to the method. The VMSC 101 and the HLR 102 have an information relationship 106 through which the VMSC obtains subscriber information from the HLR. The subscriber information relates to a prepaid subscriber 107 who has initiated the above-mentioned call setup. The VMSC creates a charging instruction on the basis of the subscriber information and the communication event information. The VMSC sends the charging instruction through the control relationship 105 to the prepaid charging system 103.

Hitherto the operation of the VMSC 101 is known in the prior art but the following steps are considered to be inventive. Due the detection of the communication event the VMSC 101 further creates a notification relationship 108 between itself and the rating engine 104. The rating engine 104 forms a supplementary instruction on the basis of information obtained from the notification relationship 108. Then the rating engine 104 sends 109 the supplementary instruction to the prepaid charging system 103 that re-charges the communication event according to the supplementary instruction.

In the above VMSC 101 made the detection about the call setup. As well the detection of VMSC 101 could have concerned triggering of a trigger. This trigger is, for example, an O-CSI (Originating - CAMEL Subscription Information) trigger is loaded to VMSC due to location update. In more detail, the O-CSI trigger is loaded, if the prepaid subscriber 107 arrives to the geographical area 110 of VMSC 101 and thus initiates the location update.

**FIG. 2** shows the method for adjusting charging of a communication event. The method represents the first main embodiment of the invention comprising the following steps of: making 201 at a network node a detection of the communication event; creating 202 due to said detection a control relationship between the network node and an online charging system and charging 203, in the online charging system, the communication event according to an instruction obtained from the control relationship. The method further comprises the steps of creating 204 due to said detection an notification relationship between the messaging centre and a rating engine; forming 205 at the rating engine a supplementary instruction on the basis of information obtained from the notification relationship; sending 206 the supplementary instruction from the rating engine to the online charging system and recharging 207, in the online charging system, the communication event according to the supplementary instruction.

The step of making 201 said detection comprises the sub-step of detecting triggering of a trigger. Alternatively, the step of making said detection comprises the sub-step of detecting a call setup. There exist a number of different communication events which can be used, if needed, as a starting point of the method.

The network node that creates the notification relationship to the rating engine is preferably one of the following nodes: an MSC (Mobile Switching Centre), an SMSC (Short Message Service Centre), an MMSC (Multimedia Messaging Service Centre), a GGSN (Gateway GPRS Support Node), an SGSN (Serving GPRS Support Node), a node providing PCEF (Policy Control Enforcement Function), a WLAN (Wireless LAN) node, a node providing IMS (IP Multimedia Subsystem), a node providing IMS Gateway Function, an IMS AS (IMS application Server), a PoC (Push to Talk over Cellular) server, or a mediation server. This list is non-restrictive.

The step of creating 204 the notification relationship may comprise obeying a charging control protocol between the network node and the rating engine. Then the charging control protocol is preferably one of the following protocols: CAMEL, Diameter Credit Control, or other Diameter protocol, wherein the list is non-restrictive. When the charging control protocol is CAMEL the step of creating 204 the notification relationship comprises the sub-steps of sending a CAP IDP message from the network node to the online charging system and sending a CAP CIR message from the online charging system to the network node.

Alternatively, the step of creating 204 the notification relationship comprises sending a CDR from the network node to the rating engine.

The step of forming 205 the supplementary instruction may comprise the sub-steps of: a) making a database search by using the information obtained from the notification relationship and b) forming at least one message on the basis of result of the database search, said at least one message comprising the supplementary instruction. The database may include a rating rule, such as a certain discount per minute when the subscriber makes a call.

The step of recharging 207 the communication event results in a discount for a subscriber which is a party in the communication event. The subscriber is, for example, the prepaid subscriber 110 shown FIG. 1 and the communication event is, for example, the call setup or the location update.

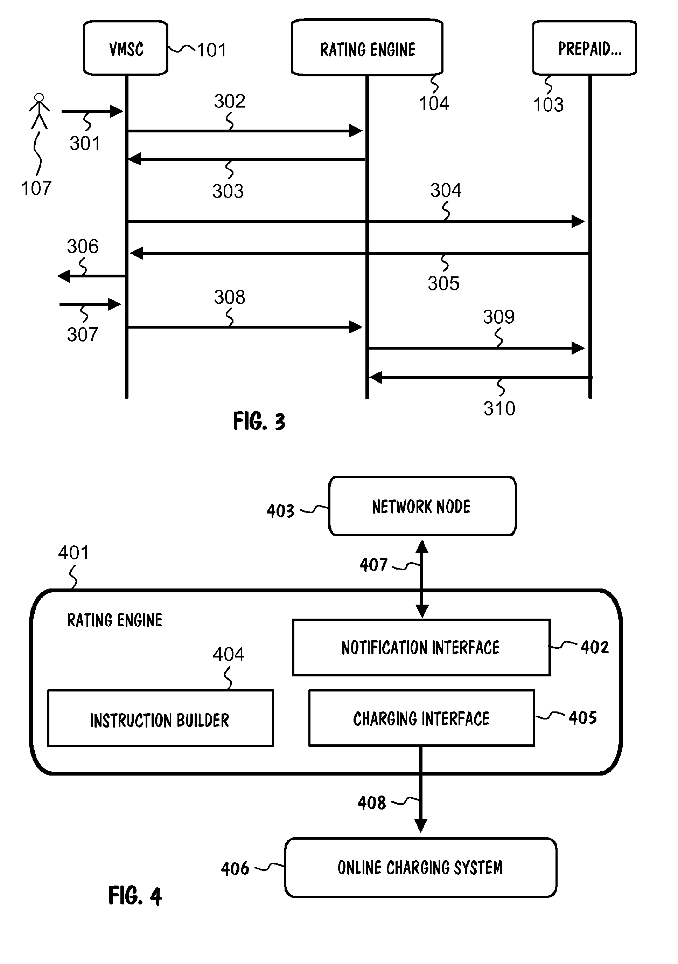

**FIG. 3** shows message transmission in the prepaid charging. This message transmission relates to the example shown in FIG. 1 and the communication between the rating engine 104 and the prepaid charging system 103. The message transmission further relates to the step of creating 202 the control relationship and the step of creating 204 the notification relationship.

When the prepaid subscriber 107 makes a call in FIG. 3 the prepaid subscriber's 107 mobile terminal initiates a call setup 301. The VMSC 101 detects the call setup 301 and sends a CAP (CAMEL Application Part) IDP message 302 to the rating engine 104. In response to the CAP IDP message 302 the rating engine 104 sends a CAP CIR message 303 with "notification only" content to the VMCS 101. Then the VMSC 101 sends a CAP IDP message 304 to the prepaid charging system 103. In response to the CAP IDP message 304 the prepaid charging system 103 sends a message 305 indicating a normal prepaid CAP dialogue. The VMSC 101 receives the message 305 and sends a message 306 which discloses that the call is now connected to the prepaid subscriber's 107 mobile terminal. When the VMSC 101 detects a communication event 307 disconnecting the call, it sends a CAP CIR message 308 with "duration of the call" content to the rating engine 104. In response to the CAP CIR message 308 the rating engine 104 forms a supplementary instruction taking into account the duration of the call. Then the VMSC sends a recharging message 309 with the supplementary instruction to the prepaid charging system 103. The prepaid charging system 103 receives this message, re-charges 109 the call according to the supplementary instruction included in the recharging message 309, and sends an OK message 310 to the rating engine 104.

In the above, the step of creating 202 the notification relationship comprises the sending of message 302, the receiving of message 303, and sending the message 308. The step of creating 204 the control relationship comprises the sending of message 304 and the receiving of message 305. The communication between the rating engine 104 and the prepaid charging system 103 comprises the messages 309 and 310.

As mentioned in the above, the method in accordance with the invention applies the charging control protocol in the step of creating 204 the notification relationship between the network node and the rating engine. In one embodiment of the invention the method uses the same protocol in the step of creating 202 the control relationship between the network node and the online charging system. The charging control protocol is preferably one of the following protocols: CAMEL, Diameter Credit Control, or other Diameter protocol. In addition, the method preferably uses Diameter Credit Control or other Diameter protocol between the rating engine and the online charging system.

In another embodiment of the invention the method uses a same selected protocol a) in the control relationship between the network node and the online charging system and b) in the communication between the rating engine and the online charging system, because then no changes, or just minor changes, are needed in the online charging system assuming that the online charging system supports use of the selected protocol.

**FIG. 4** shows the rating engine 401 for adjusting charging of a communication event. The rating engine 401 representing the second main embodiment of the invention comprises:
- a notification interface 402 for communication between the rating engine 401 and a network node 403,
- an instruction builder 404, and
- a charging interface 405 for communication between the rating engine 401 and the online charging system 406.

The notification interface 402 enables a notification relationship 407 between the network node 403 and the rating engine 401. In one embodiment of the invention the rating engine 401 is coupled to the network node 403. Then the rating engine may be connected to the network node by a message bus. In this embodiment the network node may be a mediation server, especially if the online charging system 406 is a postpaid charging system. In another embodiment the rating engine 401 is a separated server, i.e. it is not a part of any network node.

As mentioned in the above in the method description, the notification relationship 407 may mean in practice obeying a charging control protocol between the network node and the rating engine. The charging control protocol is preferably one of the following protocols: CAMEL, Diameter, or Diameter Credit Control, wherein the list is non-restrictive. When the charging control protocol is CAMEL the step of creating 204 the notification relationship comprises the sub-steps of sending a CAP IDP message from the network node to the online charging system and sending a CAP CIR message from the online charging system to the network node.

Alternatively, the notification relationship 407 means sending a CDR, or some other recharging message, from the network node 403 to the rating engine 401.

A non-restrictive list of possible network nodes, which may operate as the network node 403, is given in the above in the method description.

The instruction builder 404 forms a charging instruction on the basis of a rating rule and information obtained from the notification relationship, wherein the charging instruction includes such a value which is missing from the information obtained from the notification relationship and which either increases or decreases the charging of the communication event. The value is one of the following values: a call rating value, a call duration value, a data volume value or some other value that either increases or decreases the charging of the communication event in the online charging system.

In order to illustrate the operation of the instruction builder 404 let as assume that the information obtained from the notification relationship is information included in a CDR. Let as assume that the CDR does not include any call rating value. The instruction builder 403 forms the charging instruction on the basis of the rating rule and the information obtained from the notification relationship, for example, so that the instruction builder adds a call rating value into the CDR. Alternatively, we may assume that the CDR includes a call duration value and that value is 60 seconds. Then the instruction builder 403 forms the charging instruction on the basis of the rating rule and the information obtained from the notification relationship 407, for example, so that the instruction builder replaces the call duration value, i.e. 60 seconds, with a new value 54 seconds.

Let us then consider basic operation of a mediation server. According to this basic operation the mediation server mediates charging information from a communications network to a charging system. A call may have resulted in, for example, three CDRs each containing a call duration value. If the sum of these three call duration values is, for example, 60 second, the information of the three CDRs is that the total call duration was 60 second. According to its the basic operation the mediation server mediates the total call duration to the charging system. The mediation server may replace the three CDRs with a single CDR. It is essential that the CDR, which the mediation server sends to the online charging system, has such data format that is familiar to the charging system. Thus, the mediation server perhaps needs to perform data conversions.

According to its basic operation the mediation server is not allowed to modify the information, such as the total call duration. The mediation server is neither allowed to modify the information by adding something to it. If a prior art mediation server places a value, such the call rating value, into the CDR to be send to the charging system, the value should be originated from some of the three CDRs read by the mediation server, or the value should be derived in some predetermined way from certain values the three CDRs.

The rating engine 401, or in more detail, the instruction builder 404 intentionally modifies its input information and sends the modified information as its output to the online charging system 406. The modified information, i.e. content of the charging instruction, cannot be derived directly from the information obtained from the notification relationship 407. Conversely, the content of the charging instruction is determined on the basis of the rating rule together with the information obtained from the notification relationship 407. It should be noticed that a CDR is just one example of the charging instruction. There are other known formats, too.

The rating rule may order, for example, that the total call duration of the three CDRs is reduced 10%. If a subscriber who made the call is billed on time basis, this rating rule results in that the subscriber shall be given 10% discount for calls. The information obtained from the notification relationship 407 typically includes a telephone number. We may assume that this telephone number is searched in some kind of subscriber database and if the number is found the database, the subscriber having the number is given 10% discount. Otherwise, the discount is not given.

Alternatively, the rating rule may order, for example, the charging instruction is in practice a call rating value that results in 10% discount when the online charging system 406 charges the call.

As disclosed in the above, the invention aims to provide the flexile charging of subscribers without changes, or with minor changes, to charging systems. For example, if the total call duration is reduced 10%, no changes are needed in the online charging system 406. The charging system cannot actually detect that the subscriber is given 10% discount. Alternatively, if the charging instruction is the call rating value and if the online charging system 406 is missing ability to read and obey the call rating value, minor changes are needed to result in the wanted discount when the online charging system 406 charges the call.

The instruction builder 404 uses a rating rule, such as a discount percent that is taken into account in the charging instruction 408, if the network node 403 has detected a certain communication event and as response to it created the notification relationship 407. There may be various charging rules for various situations. A telephone number and an IP address are examples of subscriber-specific information. The charging rules and the subscriber-specific information or parts of them can be located in the rating engine's 401 memory or in such database server that is accessible through a search tool.

In one embodiment of the invention the rating rule is stored in a memory readable by the instruction builder 404. The rating rule is coupled to the subscriber-specific information so that that a search with the subscriber-specific information returns the rating rule.

The rating engine 401 optionally comprises the search tool that makes a search in the database server by using the information obtained from the notification relationship 407. In another embodiment the rating rule is stored in the database server. The rating rule is coupled to the subscriber-specific information so that that a search with the subscriber-specific information returns the rating rule stored in the database server.

The charging interface 405 of the rating engine is intended for sending the charging instruction from the rating engine 401 to the online charging system 406. If the network node 403 involves the charging of the communication event, communication between the network node 403 and the online charging system as well as communication between the rating engine 401 and the online charging system obey the same protocol. Then probably no changes are needed in the online charging system. Generally speaking, the rating engine 401 should always obey the protocol which the online charging system already supports to avoid changes in the online charging system.

The embodiment of the invention described in FIG. 1 concerns prepaid charging. The invention can as well utilized in postpaid charging.

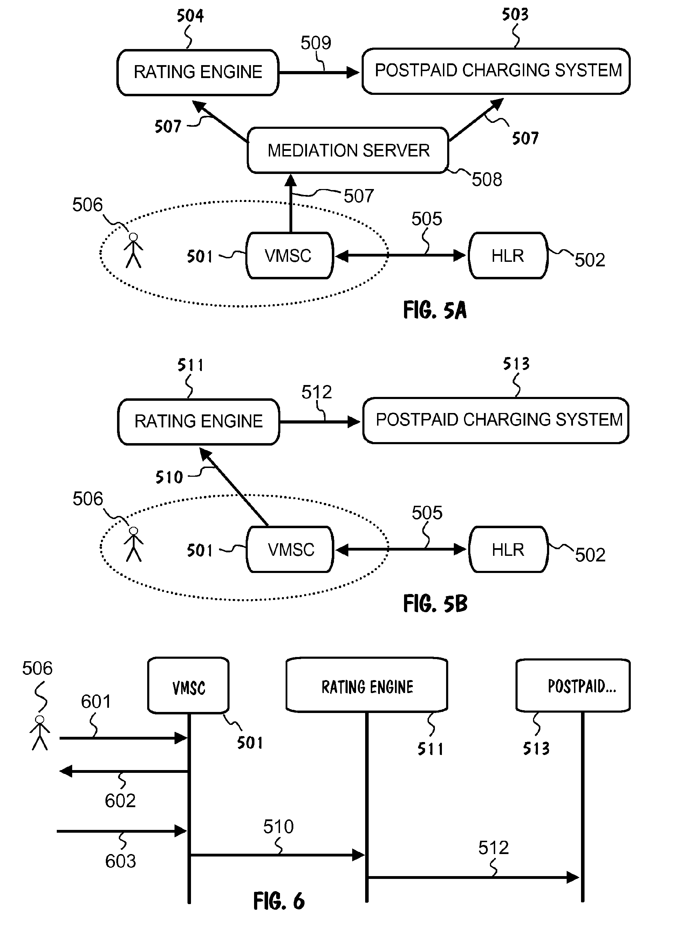

**FIG. 5A** shows an embodiment for postpaid charging. The embodiment involves similarities with the embodiment of FIG. 1 but also certain differences. A VMSC 501, an HLR 502, and a postpaid charging system 503 are known nodes of a GSM network and its successors. The postpaid charging system 503 represents here the online charging system. The fourth node shown in FIG. 5 is a rating engine 504 operating according to the method of FIG. 2.

The VMSC 501 is the network node that makes a detection of a communication event, such as a call setup. The VMSC 501 and HLR 502 have an information relationship 505 through which the VMSC obtains subscriber information from the HLR. The subscriber information relates to a postpaid subscriber 506 who initiated the call setup. The VMSC 501 sends a CDR 507 to a mediation server 508. The mediation server 508 may perform some data conversions for the CDR 507, but it basically mediates the CDR 507 to the rating engine 504 and to the postpaid charging system 503. The postpaid charging system charges the call on the basis of the CDR 507. Because the online charging system is intended for postpaid subscribers we may assume that the charging instruction formed by the rating engine 504 is a modified CDR. In more detail, the rating engine 504 forms the modified CDR 509 and sends it to the postpaid charging system 503. Then, in response to the modified CDR 509, the postpaid charging system re-charges the call.

As mentioned in the above, the rating engine 504 of FIG 5A operates according to the method of FIG. 2 and re-charges the communication event. In the following figure the recharging is not needed, because a rating engine 511 operates according to the rating engine 401 shown in FIG. 4.

**FIG. 5B** shows another embodiment for postpaid charging. The VMSC 501 is again the network node that makes a detection of a communication event that is a call setup. The VMSC 501 and HLR 502 have the information relationship 505 through which the VMSC obtains subscriber information from the HLR. The VMSC 501 does not send any charging instruction to an online charging system 513. In the other words, VMSC 501 does not create a control relationship, but it creates only a notification relationship by sending a CDR 510 to a rating engine 511. The rating engine 511 forms a charging instruction, i.e. a modified CDR 512, and sends it to a postpaid charging system 513. Then the postpaid charging system 513 charges the communication event, for the first and only time, on the basis the modified CDR 512.

**FIG. 6** shows message transmission in the postpaid charging. This message transmission relates to the example shown in FIG. 5B and the communication between the rating engine 511 and the prepaid charging system 513. The message transmission further relates to the creating of the notification relationship 402 in FIG. 4.

When the postpaid subscriber 506 makes the call the mobile terminal initiates a call setup 601. The VMSC 501 detects the call setup 601 and sends a message 602 disclosing that the call is now connected to the postpaid subscriber's 506 mobile terminal. When the VMSC 501 detects a communication event 603 disconnecting the call, the VMSC 501 sends the CDR 510 to the rating engine and the rating engine sends the modified CDR 512 to the postpaid charging system 513.

In the first main embodiment of the invention, in the recharging embodiment, the network node and the rating engine together control charging of communication events (FIG. 2). In the second main embodiment of the invention, in the single charging embodiment, which is considered to be the best embodiment, the rating engine alone controls the charging of the communication events (FIG. 4).

In addition to the embodiments, descriptions and examples of the invention that have been presented above, the method and the rating engine in accordance with the invention can be implemented in various ways which, however, are obvious to the person skilled in the art due to his/her professional skill and advices given by this patent application.

## Claims

1. A method for adjusting charging of a communication event, the method comprising the steps of
making at a network node a detection of the communication event; creating due to said detection a control relationship between the network node and an online charging system and
charging, in the online charging system, the communication event according to an instruction obtained from the control relationship;
**characterized in that** the method further comprises the steps of:
creating due to said detection a notification relationship between the network node and a rating engine;
forming at the rating engine a supplementary instruction on the basis of information obtained from the notification relationship;
sending the supplementary instruction from the rating engine to the online charging system and
recharging, in the online charging system, the communication event according to the supplementary instruction.

2. The method as in claim 1, **characterized in that** the step of making said detection comprises the sub-step of
detecting triggering of a trigger.

3. The method as in claim 1, **characterized in that** the step of making said detection comprises the sub-step of
detecting a call setup.

4. The method as in claim 1, **characterized in that** the network node is one of the following nodes:
an MSC (Mobile Switching Centre), an SMSC (Short Message Service Centre), an MMSC (Multimedia Messaging Service Centre),
a GGSN (Gateway GPRS Support Node),
an SGSN (Serving GPRS Support Node),
a node providing PCEF (Policy Control Enforcement Function),
a WLAN (Wireless LAN) node,
a node providing IMS (IP Multimedia Subsystem),
a node providing IMS Gateway Function,
an IMS AS (IMS application Server),
a PoC (Push to Talk over Cellular) server, or
a mediation server.

5. The method as in claim 1, **characterized in that** the step of creating the notification relationship comprises obeying a charging control protocol.

6. The method as in claim 5, **characterized in that** step of creating the notification relationship comprises sending a CDR from the network node to the rating engine.

7. The method as in claim 1, **characterized in that** the step of forming the supplementary instruction comprises the sub-steps of:
making a database search by using the information obtained from the notification relationship and
forming at least one message on the basis of result of the database search, said at least one message comprising the supplementary instruction.

8. The method as in claim 1, **characterized in that** the step of recharging the communication event results in a discount for a subscriber which is a party in the communication event.

9. A rating engine for adjusting charging of a communication event, **characterized in that** the rating engine comprises:
a notification interface for communication between the rating engine and the network node,
an instruction builder, and
a charging interface for communication between the rating engine and the online charging system, wherein
the notification interface enables a notification relationship between the network node and the rating engine;
the instruction builder forms a charging instruction on the basis of a rating rule and information obtained from the notification relationship, wherein the charging instruction includes such a value which is missing from the information obtained from the notification relationship and which either increases or decreases the charging of the communication event.
the charging interface is used for sending the charging instruction from the rating engine to the online charging system.

10. The rating engine as in claim 9, **characterized in that** the value is one of the following values: a call rating value, a call duration value, data volume value.

11. The rating engine as in claim 9, **characterized in that** the rating engine is coupled to the network node.

12. The rating engine as in claim 9, **characterized in that** the notification relationship obeys a charging control protocol.

13. The rating engine as in claim 9, **characterized in that** the rating rule is stored in a memory readable by the instruction builder.

14. The rating engine as in claim 9, **characterized in that** the rating engine further comprises a search tool that makes a search in a database server by using the information obtained from the notification relationship.

15. The rating engine as in claim 14, **characterized in that** the rating rule is stored in the database server.
